Europäisches Patentamt

European Patent Office

Office européen des brevets

(19)

(11) Veröffentlichungsnummer: **0 230 492**
**B1**

(12) **EUROPÄISCHE PATENTSCHRIFT**

(45) Veröffentlichungstag der Patentschrift:
**13.06.90**

(51) Int. Cl.⁵: **C03B 5/04**

(21) Anmeldenummer: **86100878.7**

(22) Anmeldetag: **23.01.86**

(54) Glasschmelzofen mit verbessertem Wirkungsgrad.

(43) Veröffentlichungstag der Anmeldung:
**05.08.87 Patentblatt 87/32**

(45) Bekanntmachung des Hinweises auf die Patenterteilung:
**13.06.90 Patentblatt 90/24**

(84) Benannte Vertragsstaaten:
**AT BE CH DE FR GB IT LI NL SE**

(56) Entgegenhaltungen:
**DE-B- 1 254 297**
**US-A- 1 973 689**
**US-A- 2 300 427**
**US-A- 3 198 618**
**US-A- 3 574 585**
**US-A- 4 001 001**

(73) Patentinhaber: **Sorg GmbH & Co. KG, Im Aller 23 Postfach 520, D-8770 Lohr/Main(DE)**

(72) Erfinder: **Pieper, Helmut, Dipl.-Ing., Buchenstrasse 19, D-8770 Lohr/Main(DE)**

(74) Vertreter: **Schulze Horn, Stefan, Dipl.-Ing. M.Sc., Goldstrasse 36, D-4400 Münster(DE)**

## Beschreibung

Die Erfindung betrifft einen Glasschmelzofen, bei welchem ein Gemenge an einer Schmalseite eines rechteckigen Glasbades in gesamter Breite auf dieses aufgegeben wird, mit nahe der anderen Schmalseite angeordneten Brennern zur Zuführung von Energie, mit Wärmeaustauschern zum Energieaustausch zwischen den Verbrenungsgasen und der den Brennern zugeführten Verbrennungsluft, wobei im Boden des Gemengeaufgabeteils Elektroden zur Zuführung elektrischer Energie im Bereich der Gemengeaufgabe vorhanden sind.

Glasschmelzöfen haben allgemein, obwohl sie mit Rekuperatoren oder Regeneratoren arbeiten, den Nachteil eines relativ geringen Wirkungsgrades. Dies liegt nicht an der mangelnden Isolation der Glaswannen, sondern daran, daß die Abgaswärme die zur Vorheizung der Verbrennungsluft benötigte Wärmeenergie erheblich übersteigt. Einer Erhöhung der Temperatur der Verbrennungsluft sind dabei Grenzen gesetzt, da dadurch der Wärmeaustausch zum einen sehr aufwendig wird, zum anderen aber die Konzentration des giftigen $NO_x$ stark steigt.

Um den Wärmeüberschuß im Abgas sinnvoll zu nutzen, hat es bereits verschiedene Versuche gegeben, auch das Gemenge vor dem Einbringen in die Glasschmelzwanne vorzuheizen. Diese Versuche waren aber erfolglos, da durch die Aufheizung bereits ein Vorschmelzen von einigen Gemengebestandteilen auftreten kann, wodurch die Wärmeaustauschflächen verkleben und zum anderen bei direktem Kontakt des Abgases mit dem Gemenge neben dem Vorschmelzen bestimmter Bestandteile auch noch ein Entmischen auftritt bzw. bestimmte Gemengebestandteile mitgenommen werden, wodurch der Staubgehalt im Abgas unzulässig erhöht wird bzw. sehr aufwendige Staubfilter erforderlich werden.

Aus der US-A 4 001 001 ist bereits ein Glasschmelzofen der eingangs genannten Art bekannt, in welchem im Aufgabebereich des Gemenges Brenner vorhanden sind und bei dem das Abgas das Gemenge quer überstreicht. In diesem bekannten Ofen kann das Abgas das Gmenge nicht im Gegenstrom überstreichen, so daß der Wirkungsgrad dieses bekannten Ofens nur unnötig gering ist, während der bauliche Aufwand erheblich ist.

Es ist demgegenüber Aufgabe der Erfindung, einen Glasschmelzofen zu schaffen, dem die genannten Nachteile nicht mehr anhaften, der gegenüber bekannten Öfen einen erheblich verbesserten Wirkungsgrad aufweist, gleichwohl aber wirtschaftlich zu erstellen ist und bei dem geringere $NO_x$-Konzentrationen sowie ein geringerer Staubgehalt im Abgas vorliegt, ohne daß schwierig zu beherrschende, eine hohe Temperatur aufweisende Bauteile im Ofen oder für den Wärmetausch notwendig werden.

Die Oberofentemperaturen und die Temperaturen in den verwendeten Wärmetauschern (Rekuperatoren) sollen sogar geringer als bei den üblichen, bekannten Öfen sein.

Über die genannten Vorteile hinaus soll der erfindungsgemäße Ofen wirtschaftlich herstellbar und betriebssicher zu fahren sein, wobei ein weitgehender Austausch von fossiler und elektrischer Energie möglich sein soll.

Diese Aufgabe wird erfindungsgemäß bei dem eingangs genannten Ofen dadurch gelöst, daß die Öffnungen zum Abziehen des Abgases neben der Gemengeaufgabe angeordnet sind, die Decke des Ofens zwischen dem Brennerteil und dem Gemengeaufgabeteil und im Gemengeaufgabeteil jeweils mindestens einen sich bis kurz über die Badoberfläche erstreckenden Strahlungsschutzwall aufweist, daß im Gemengeaufgabeteil die Wände zur Zurückführung der Verbrennungsgase als Doppelwände ausgeführt sind, daß die Wärmetauscher als Rekuperatoren ausgebildet in einen Hoch- und einen Niedertemperaturteil geteilt sind und daß der Wannenboden unterhalb des ersten Strahlungsschutzwalls eine Schwelle aufweist.

Weitere vorteilhafte Ausgestaltungen, insbesondere zur Erhöhung des Wirkungsgrades und zur Verringerung des Aufwandes sind in den Unteransprüchen 2 bis 5 beschrieben.

Ersichtlicherweise vermag der erfindungsgemäße Glasschmelzofen in Verbindung mit dem Verfahren zu seinem Betrieb die anstehenden Probleme in besonders vorteilhafter Weise zu lösen. Das erfindungsgemäße Prinzip besteht dabei, das Gemenge auf das Glasbad aufzubringen und dort durch das Abgas vorzuwärmen und dabei das Abgas soweit abzukühlen, daß die verbliebene Energie fast vollständig zur Aufheizung der Verbrennungsluft verwendet werden kann. Das Flüssigbleiben des Glases und die Einstellung eines optimalen Strömungsfeldes in dem Gemenge-Vorwärmbereich der Wanne wird dabei durch die Zugabe von vergleichsweise geringen Mengen elektrischer Energie gewährleistet.

Im folgenden werden Ausführungsbeispiele der Erfindung anhand von Zeichnungen näher erläutert. Es zeigen:

Figur 1 einen Längsschnitt durch eine Glaswanne gemäß der Erfindung,

Figur 2 einen Horizontalschnitt durch eine Wanne ähnlich Figur 1 und

Figur 3 einen Horizontalschnitt durch eine andere Ausführungsform einer erfindungsgemäßen Wanne.

Gemäß den Figuren besteht der erfindungsgemäße Glasschmelzofen aus einer länglichen, rechteckigen Wanne mit einem Brennerteil 2 und einem Gemengeaufgabeteil 3, die ineinander übergehen und wobei der Gemengeaufgabeteil 3 eine Länge aufweist, die ca. 2–2 1/2 mal so groß ist wie die des Brennerteils 2. Als Brennerteil 2 wird derjenige Wannenteil bezeichnet, in welchem die Brenner 20 angeordnet sind, die zur Verfeuerung von Öl oder Gas dienen.

Die Wanne weist weiterhin brennerseitig eine Querwand 16, gemengeaufgabeseitig eine Querwand 17 und Längswände 18 auf. Der Oberofen wird von einer Decke 1 gebildet. Der Wannenboden ist mit 9 bezeichnet.

Im Gemengeaufgabeteil 3 sind Bodenelektroden 6 angeordnet, die ein Einfrieren des Glasbades in diesem Bereich, insbesondere im direkten Bereich der Gemengeauflage verhindern. Das Einfrieren wird weiterhin dadurch verhindert, daß innerhalb des Gemengeaufgabeteils eine Strömung eingestellt wird, die laufend hocherhitztes Glas aus dem brennerseitigen Bereich in den Bereich der Gemengeaufgabe befördert.

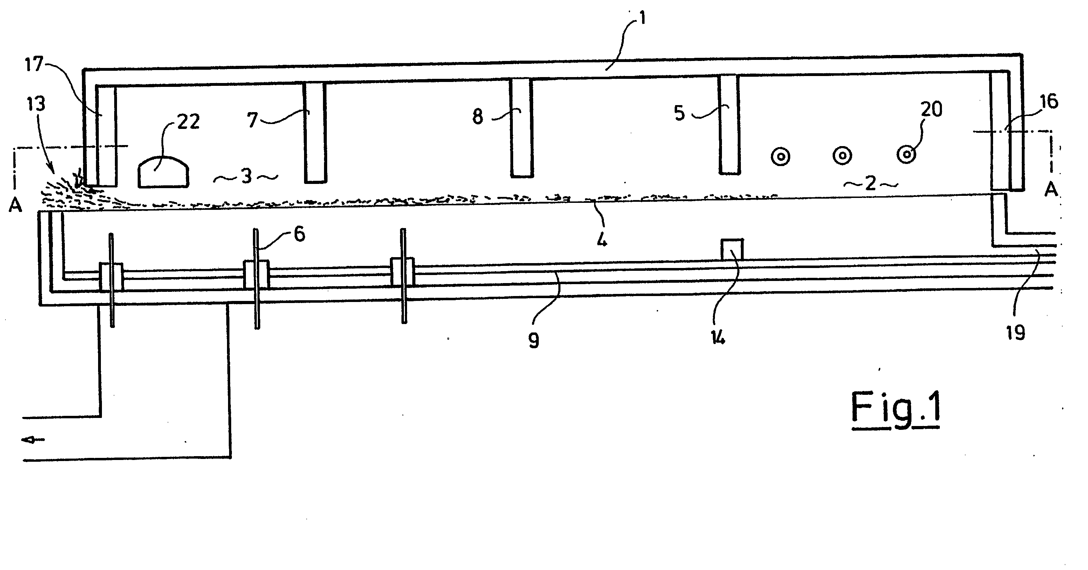

Die Gemengeaufgabe erfolgt in herkömmlicher Weise auf der ganzen Breite der Querwand 17, es sind jedoch Mittel 13 vorhanden, die den Aufgaberaum vom Inneren der Wanne abschließen. Dieser Abschluß kann zum einen durch das Gemenge selbst erfolgen (Figur 1) oder es können Schürzen Schleusen oder dergleichen bekannte Mittel zum Einsatz kommen.

Im einzelnen ist die Wanne entsprechend herkömmlicher Technik aufgebaut, wie sie auch in älteren Anmeldungen der Anmelderin beschrieben wird, so daß auf eine weitergehende Beschreibung verzichtet werden kann. Dies gilt insbesondere für die Gestaltung der Wandungen, des Gewölbes, des Bodens, der Brenner, der Elektroden sowie des Auslaßes 19 am gemengeaufgabenfernen Ende des Brennerteils 2 und für die Gestaltung der Abgasabzugsöffnungen 22 direkt neben der Gemengeaufgabe.

Im Wanneninneren ist am aufgabeseitigen Ende des Brennerteils 2 ein Strahlungsschutzwall 5 angeordnet, der von der Decke bis dicht über die Badoberfläche 4 reicht und verhindert, daß Strahlung in den Gemengeaufgabeteil 3 gelangt. Wie bekannt, wird bei hohen Kammertemperaturen der größte Teil der Energie durch Strahlung übertragen und es ist daher erfindungswesentlich, die durch die Brenner 20 zugeführte Energie im Brennerteil 2 zu konzentrieren.

Da weitere beträchtliche Strahlungsmengen von der Badoberfläche und insbesondere von dem Schutzwall 5 zur Aufgabeseite hin wirksam sind, weist der Gemengeaufgabeteil 3 noch einen weiteren Strahlungsschutzwall 7 in der Nähe der Gemengeaufgabe und zwischen den Schutzwällen 5 und 7 einen weiteren Schutzwall 8 auf. Durch diese Anordnung wird sicher verhindert, daß nennenswert Strahlungsenergie zur Gemengeaufheizung dient, sondern dieses soll praktisch ausschließlich durch das Abgas erfolgen, welches aus dem Brennerteil 2 durch den Gemengeaufgabeteil 3 zu den Abgasaustrittsöffnungen 22 strömt.

Fakultativ kann der Boden 9 am aufgabeseitigen Ende des Brennerteils 2 eine Schwelle 14 aufweisen, die ein Strömungsbild einstellt, in welchem Heißglas zurück zur Gemengeauflage strömt und dort in Verbindung mit den Bodenelektroden 6 ein Einfrieren des Glases verhindert.

Das auf ca. 900–1000°C abgekühlte Abgas wird nach Austritt aus der Wanne erst einem Hochtemperatur-Gegenstrom-Rekuperator und danach einem Niedertemperatur-Gegenstrom-Rekuperator zugeführt, aus welchem es mit einer Temperatur von ca. 300–350°C austritt. Bei dieser Temperatur ist die dem Abgas innewohnende Energie weitgehend auf die Verbrennungsluft übergegangen, der Taupunkt ist jedoch noch deutlich überschritten, so daß Korrosions- und Absetzprobleme vermieden bleiben.

In den Rekuperatoren 10 (Hochtemperatur) und 11 (Niedertemperatur) wird durch das abkühlende Abgas die Verbrennungsluft von Normaltemperatur auf eine Temperatur von ca. 700–800°C vorgewärmt und dann über Rohrleitungen 21 den Brennern 20 zugeführt. Die aufgrund der relativ geringen Lufttemperaturen erfolgende Verbrennung weist den Vorteil auf, daß die Flammtemperaturen relativ niedrig sind und daher höhere Konzentrationen von $NO_x$ nicht auftreten können. Das Abgas ist also nicht nur weit abgekühlt, sondern weist auch äußerst geringe Konzentrationen von $NO_x$ auf, so daß ein Betrieb des erfindungsgemäßen Glasschmelzofens auch in Gebieten mit geringen Emissionswerten, z.B. in Städten, möglich ist, zumal der Einsatz eines Staubfilters aufgrund der geringen Abgastemperaturen leicht möglich ist.

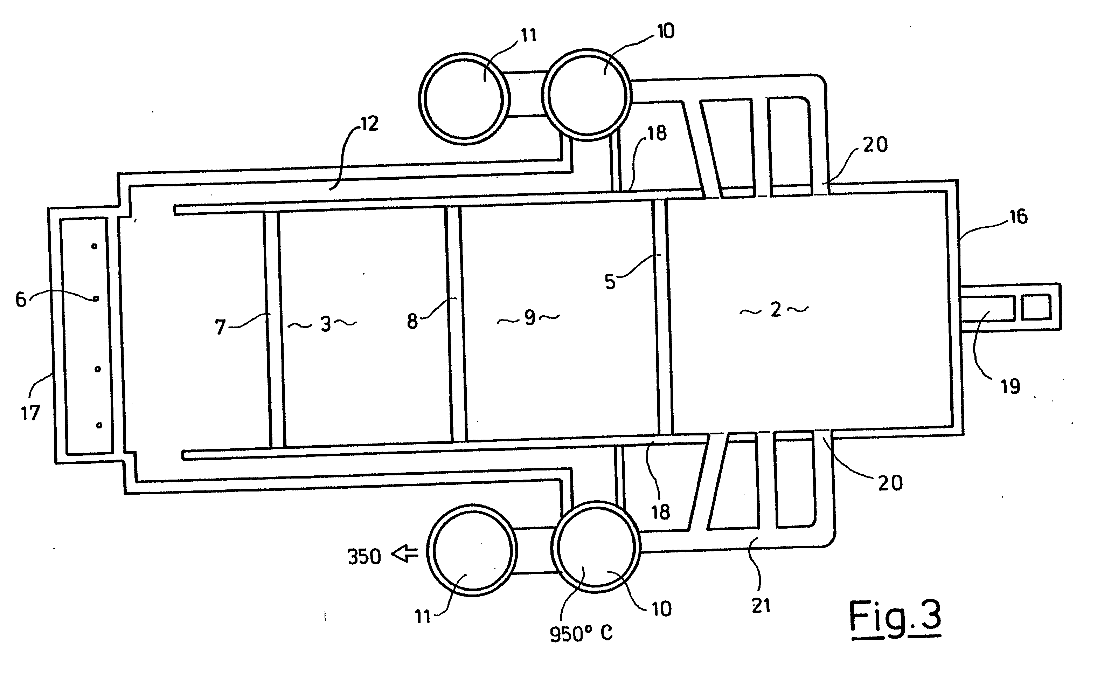

Gemäß Figur 3 wird der Wärmeübergang von dem Abgas in das Gemengeaufgabeteil 3 dadurch verbessert, daß die Längswände als Doppelwand 12 ausgeführt werden, in denen das Abgas von den Abzugsöffnungen 22 zu dem Hochtemperatur-Rekuperator 10 strömt.

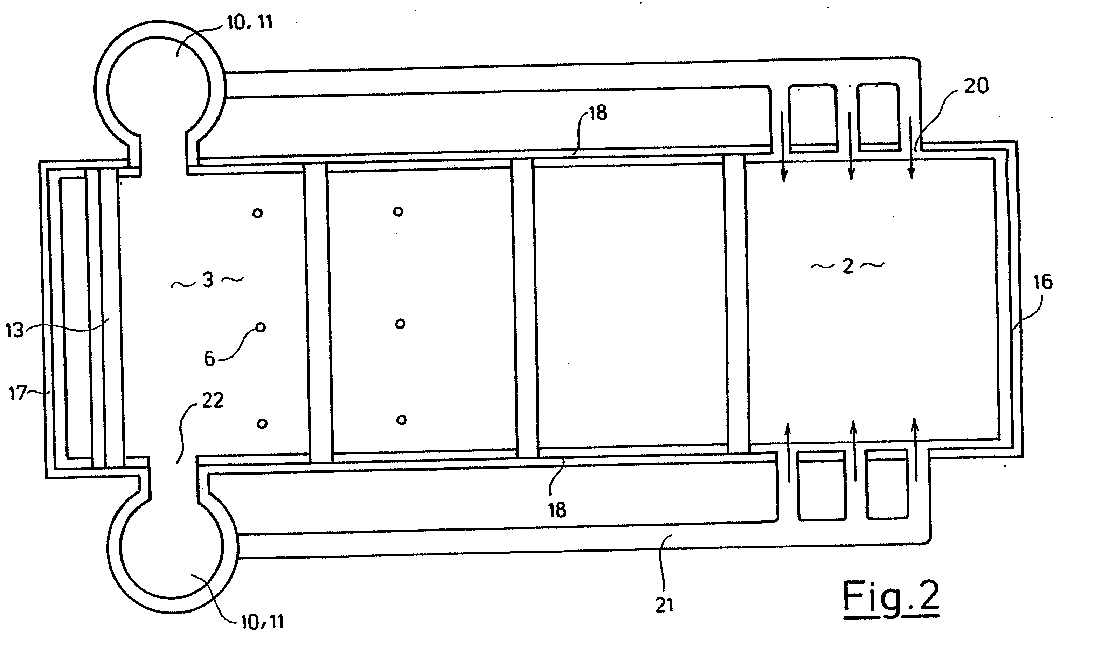

Gemäß Figur 2 können die Rekuperatoren 10 und 11 auch zu einer Einheit zusammengefaßt sein und direkt neben den Auslaßöffnungen 22 angeordnet werden.

Vom Betrieb der Wanne her ist es wichtig, daß das Gemengeaufgabeteil 3 in seinem aufgabeseitigen Ende ausschließlich zur Gemengevorwärmung dient und ein wesentliches Einschmelzen des Gemenges erst am brennerseitigen Ende des Gemengeaufgabeteils erfolgt, wobei dann im Brennerteil 2 ein Läutern des Glases stattfindet, bevor dieses durch einen Bodenauslaß 19 in bekannter Weise am aufgabefernen Ende des Brennerteils 2 abgezogen wird. Durch die Strahlungsschutzwälle 5, 7 und 8 wird weiterhin eine Gasgeschwindigkeit über dem Gemenge von ca. 10–15 m/s eingestellt, die neben der Strahlungswärmeübertragung auch noch eine gewisse konvektive Wärmeübertragung erlaubt. Die Strahlungsschutzwälle sind dabei z.B. entsprechend scheitrechten Bögen wie bei großen Doghausbögen aufgebaut.

Die zugeführte elektrische Energie kann weiterhin derartig im Verhältnis zu der durch die Brenner zugeführten Energie gewählt werden, daß der $NO_x$-Massenstrom die zulässigen Werte nicht überschreitet. Bei höherem Anteil der elektrischen Energie sinkt dabei der $NO_x$-Massenstrom und steigt bei Verringerung des Anteils an.

Bei den Rekuperatoren 10 und 11 dient der erstgenannte als Strahlungsrekuperator, während der zweite auf der Konvektion als Wärmeübertragungsart aufbaut. In diesem Rekuperator 11 kann eine Abreinigung, System Schack, oder entsprechend einem Kugelrekuperator vorhanden sein. Auf diese Weise wird auch sichergestellt, daß das Abgas nur einen äußerst geringen Staubanteil enthält, so daß eine Nachentstaubung u.U. entfallen kann.

Der erfindungsgemäße Glasschmelzofen kann wirtschaftlich hergestellt werden, da im Gemengeaufgabeteil aufgrund der geringeren Temperaturen kostengünstiges Feuerfestmaterial eingesetzt werden kann.

Es liegt im Wesen der Erfindung, daß der gesamte Glasschmelzofen, die Leitungen für das Abgas und für die erwärmte Verbrennungsluft stark isoliert werden. Trotzdem ist es für den Fachmann überraschend, daß der spezifische Energieverbrauch auf den bisher unerreichten Wert von 3100–3400 kjoule/kg Glas verringert werden kann.

## Patentansprüche

1. Glasschmelzofen, bei welchem ein Gemenge an einer Schmalseite eines rechteckigen Glasbades in gesamter Breite auf dieses aufgegeben wird, mit nahe der anderen Schmalseite angeordneten Brennern zur Zuführung von Energie, mit Wärmeaustauschern zum Energieaustausch zwischen den Verbrennungsgasen und der den Brennern zugeführten Verbrennungsluft, wobei im Boden des Gemengeaufgabeteils Elektroden (6) zur Zuführung elektrischer Energie im Bereich der Gemengeaufgabe vorhanden sind, dadurch gekennzeichnet, daß die Öffnungen (22) zum Abziehen des Abgases neben der Gemengeaufgabe angeordnet sind, die Decke (1) des Ofens zwischen dem Brennerteil (2) und dem Gemengeaufgabeteil (3) und im Gemengeaufgabeteil jeweils mindestens einen sich bis kurz über die Badoberfläche (4) erstreckenden Strahlungsschutzwall (18) aufweist,
daß im Gemengeaufgabeteil (3) die Wände (12) zur Zurückführung der Verbrennungsgase als Doppelwände ausgeführt sind,
daß die Wärmetauscher als Rekuperatoren ausgebildet in einen Hoch- und einen Niedertemperaturteil (10 und 11) geteilt sind und
daß der Wannenboden (9) unterhalb des ersten Strahlungsschutzwalls (5) eine Schwelle (14) aufweist.

2. Glasschmelzofen nach Anspruch 1, dadurch gekennzeichnet, daß der Gemengeaufgabeteil (3) länger als der Brennerteil (2) ist.

3. Glasschmelzofen nach Anspruch 2, dadurch gekennzeichnet, daß der Gemengeaufgabeteil (3) mindestens zweimal die Länge des Brennerteils (2) aufweist.

4. Glasschmelzofen nach einem der Ansprüche 1 bis 3, dadurch gekennzeichnet, daß in dem Gemengeaufgabeteil (3) mindestens ein weiterer Strahlungsschutzwall (7) vorhanden ist.

5. Glasschmelzofen nach einem der Ansprüche 1 bis 4, gekennzeichnet durch die Gemengeeingabeöffnung abschließende Mittel (13).

## Claims

1. Glass melting furnace, in which a glass batch is supplied thereto on a narrow side of a rectangular glass bath along the entire width, with burners arranged close to the other narrow side for supplying energy, with heat exchangers for energy exchange between the combustion gases and the combustion air supplied to the burners, with electrodes (6) for supplying electrical energy in the region of the batch feed-in point being present in the base of the batch feed-in section, characterised in that the openings (22) for removal of the waste gas are arranged close to the batch feed-in point, the roof (1) of the furnace between the burner section (2) and the batch feed-in section (3) and in the batch feed-in section in each case has at least one radiation protection wall (18) extending until a short distance above the bath surface (4),
that in the batch feed-in section (3) the walls (12) for returning the combustion gases are constructed as double walls,
that the heat exchangers, designed as recuperators, are divided into a high temperature section and a low temperature section (10 and 11) and
that the tank base (9) has a threshold (14) beneath the first radiation protection wall (5).

2. Glass melting furnace according to claim 1, characterised in that the batch feed-in section (3) is longer than the burner section (2).

3. Glass melting furnace according to claim 2, characterised in that the batch feed-in section (3) is at least twice the length of the burner section (2).

4. Glass melting furnace according to one of claims 1 to 3, characterised in that there is at least one additional radiation protection wall (7) in the batch feed-in section (3).

5. Glass melting furnace according to one of claims 1 to 4, characterised by means (13) closing the batch feed-in opening.

## Revendications

1. Four de fusion de verre dans lequel une fritte est alimentée sur un côté étroit d'un bain de verre rectangulaire sur toute la largeur de ce dernier, comportant des brûleurs disposés auprès de l'autre petit côté pour amener de l'énergie, des échangeurs de chaleur pour échanger l'énergie entre les gaz de combustion et l'air de combustion amené aux brûleurs, des électrodes (6) destinées à amener de l'énergie électrique dans la zone de l'alimentation en fritte étant disposées au fond de la partie d'alimentation de fritte, caractérisé en ce que les orifices (22) d'extraction des gaz d'échappement sont disposés près de l'alimentation en fritte, la voûte (1) du four présente entre la partie des brûleurs (2) et la partie d'alimentation en fritte (3) et dans la partie d'alimentation en fritte respectivement au moins une paroi contre les rayonnements (18) s'étendant jusqu'un peu au-dessus de la surface du bain,
en ce que les parois (12) de renvoi des gaz de combustion, dans la partie d'alimentation en fritte (3), sont réalisées sous forme de parois doubles,
en ce que les échangeurs de chaleur présentent des structures de récupérateurs et sont divisés en une partie à haute température et une partie à basse température (10 et 11) et
en ce que le fond de cuve présente un seuil (14) au-dessous de la première paroi de protection contre les rayonnements (5).

2. Four de fusion de verre selon la revendication 1, caractérisé en ce que la partie d'alimentation en fritte (3) est plus longue que la partie de brûleur (2).

3. Four de fusion de verre selon la revendication 2, caractérisé en ce que la partie d'alimentation en fritte (3) est d'une longueur au moins égale à deux fois celle de la partie de brûleur (2).

4. Four de fusion de verre selon l'une des revendications 1 à 3, caractérisé en ce qu'un moins une autre paroi de protection contre les rayonnements (7) est présente dans la partie d'alimentation en fritte (3).

5. Four de fusion de verre selon l'une des revendications 1 à 4, caractérisé en ce que l'orifice d'alimentation en fritte comprend des moyens de fermeture (13).

Fig.1

EP 0 230 492 B1

Fig.2

EP 0 230 492 B1

Fig.3

11 10 12 18 20 16 6 17 7 3 8 9 5 2 19 18 20 11 10 21 350 950° C

EP 0 230 492 B1